# EUROPEAN PATENT APPLICATION

(11) **EP 2 527 684 A2**
(43) Date of publication of application: **28.11.2012**
(21) Application number: 12163386.1
(22) Date of filing: 05.04.2012
(51) Int. Cl.: F16G 9/00, D07B 5/00

(54) **Rope with spiral teeth**

(30) Priority: 24.05.2011 JP 2011115936
(71) Applicant: ASAHI INTECC CO., LTD., Nagoya-shi, Aichi 463-0024 (JP)
(72) Inventor: Hirooka, Takazumi, Nagoya-shi, Aichi 463-0024 (JP)
(74) Representative: Winter, Brandl, Fürniss, Hübner, Röss, Kaiser, Polte - Partnerschaft

(57) **Abstract**

The invention relates to a rope (1) with spiral teeth which includes: a first rope (2) obtained by coating a first core material (3) with a first resin (4); and a second rope (5) obtained by coating a second core material (6) with a second resin (7), the second rope (5) being spirally wound around an outer circumferential surface of the first rope (2), wherein at least one of the first resin (4) and the second resin (7) contains an infrared reflectance adjusting material to make a temperature rise characteristic of the first resin (4) and a temperature rise characteristic of the second resin (7) different from each other, and the first rope (2) and the second rope (5) are bonded together.

## Description

### Cross Reference to Related Applications

This application claims priority from Japanese Patent Application No. 2011-115936 filed with the Japan Patent Office on May 24, 2011 the entire content of which is hereby incorporated by reference.

### Technical Field

The present invention relates to a rope with spiral teeth.

### Background Art

In the related art, a rope with spiral teeth has been used to accurately and quietly move a carriage of a printer or a movable member such as a scanner.

For example, JP-A-2004-239347 and JP-A-2001-241514 disclose a rope with spiral teeth. The rope with spiral teeth includes a rope body and a wiring body wound around the outer circumferential surface of the rope body. The rope body includes a wire rope serving as a core material and a first resin covering the wire rope. The wiring body includes a core material and a second resin covering the core material.

In the rope with spiral teeth disclosed in the above patent documents, the rope body (first resin) and the wiring body (second resin) are bonded with an isocyanate-based adhesive. Therefore, the bonding strength may be reduced due to the adhesive being unevenly coated. The reduction in bonding strength may cause the wiring body to peel off the rope body while in use.

The rope with spiral teeth also includes a spiral protrusion formed of the wiring body. The protrusion needs to have a predetermined shape that hardly changes. That is, the wiring body needs to be constantly and securely engaged with a groove of a gear.
In the case where the protrusion is not kept in the predetermined shape, it is difficult for the wiring body to engage with the groove of the gear. As a result, so- called "tooth jumping" may occur.

In addition, the first resin and the second resin need to have excellent durability.

### Summary of Invention

An object of the present invention is to provide a rope with spiral teeth in which the above problems of, for example, an adhesive being coated unevenly does not occur in production and the bonding strength between first and second ropes is high. This object is solved by a rope with spiral teeth according to claim 1 and a method for manufacturing such a rope with spiral teeth according to claim 7.
The present inventor has completed the rope with spiral teeth of the present invention by conducting intensive studies to solve the above problems and by making the following findings. That is, an infrared reflectance adjusting material is blended into the first resin of the rope body and/or the second resin of the wiring body which are bonded together. The blending is performed such that temperature rise characteristics of the respective resins differ from each other. As a result, a high bonding strength between the rope body and the wiring body can be achieved without using an adhesive. The spiral protrusion formed of the wiring body securely maintains the predetermined shape. Therefore, a rope with spiral teeth having minimal tooth jumping and high durability can be obtained.

That is, a rope with spiral teeth of the present invention includes: a first rope obtained by coating a first core material with a first resin; and a second rope obtained by coating a second core material with a second resin, the second rope being spirally wound around an outer circumferential surface of the first rope, wherein at least one of the first resin and the second resin contains an infrared reflectance adjusting material to make a temperature rise characteristic of the first resin and a temperature rise characteristic of the second resin different from each other, and the first rope and the second rope are bonded together.

In the rope with spiral teeth of the present invention, preferably, the first resin contains an infrared reflectance adjusting material A as the infrared reflectance adjusting material, the second resin contains an infrared reflectance adjusting material B as the infrared reflectance adjusting material, and an infrared reflectance of the infrared reflectance adjusting material A and an infrared reflectance of the infrared reflectance adjusting material B differ from each other.

In the rope with spiral teeth of the present invention, the infrared reflectance of the infrared reflectance adjusting material B is preferably higher than the infrared reflectance of the infrared reflectance adjusting material A.

In the rope with spiral teeth of the present invention, the infrared reflectance adjusting material is preferably made of at least one pigment selected from the group consisting of a composite oxide pigment, a titanium oxide pigment, and a carbon black pigment.

In the rope with spiral teeth of the present invention, the first resin and the second resin are preferably made of the same kind of resin material.

In the rope with spiral teeth of the present invention, the first resin and the second resin are preferably made of a thermoplastic resin.

### Brief Description of Drawings

The foregoing and other objects, features, aspects and advantages of the invention will become more apparent from the following detailed description when taken in conjunction with the accompanying drawings.

Fig. 1 is a partial front view schematically illustrating a rope with spiral teeth according to the first embodiment of the present invention in use; and
Fig. 2 is a cross-sectional view of the rope with spiral teeth illustrated in Fig. 1.

### Description of Embodiments

Preferred embodiments of the present invention are described below with reference to the accompanying drawings, in which like reference characters designate similar or identical parts throughout the several views thereof.

### (First embodiment)

The configuration and effects of the rope with spiral teeth of the first embodiment of the present invention will be described below in detail with reference to the drawings.

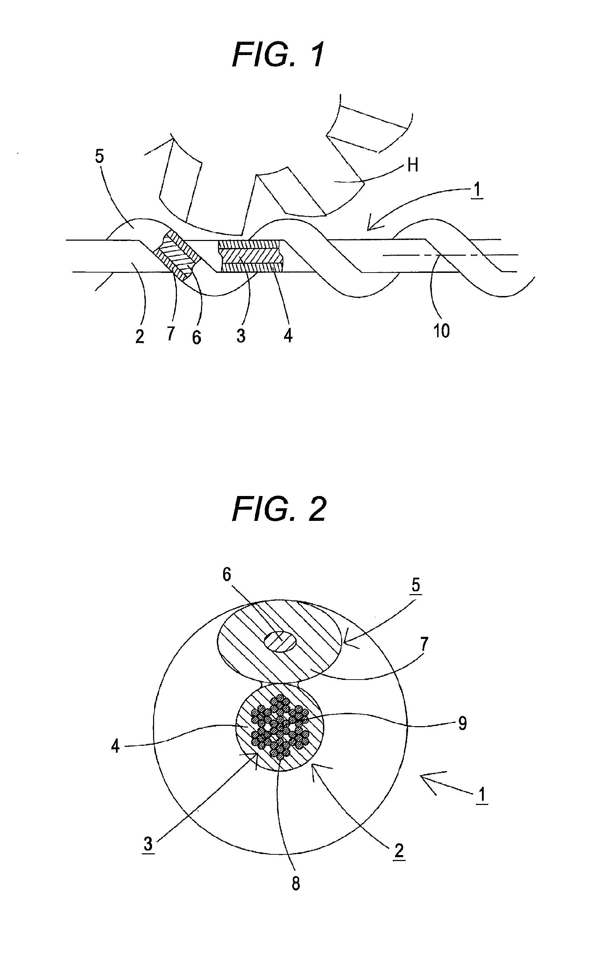

Fig. 1 is a partial front view schematically illustrating the rope with spiral teeth according to the first embodiment of the present invention in use. Fig. 2 is a cross-sectional view of the rope with spiral teeth illustrated in Fig. 1.
Note that in Fig. 1, notched (hatched) portions are illustrated to explain the configurations of a first rope 2 and a second rope 5.
In Fig. 2, the second rope 5 has an elliptical cross section. This is because the second rope having a substantially circular cross section is spirally wound around the outer circumferential surface of the first rope.

The rope with spiral teeth 1 of the first embodiment of the present invention illustrated in Figs. 1 and 2 includes the first rope 2 and the second rope 5. The first rope 2 includes a first core material 3 and a first resin 4 covering the first core material 3. The second rope 5 includes a second core material 6 and a second resin 7 covering the second core material 6.
The second rope 5 is spirally wound around the outer circumferential surface of the first rope 2.

At least one of the first resin 4 and the second resin 7 contains an infrared reflectance adjusting material to make their temperature rise characteristics different from each other.
The first rope 2 and the second rope 5 are bonded together.

In the rope with spiral teeth 1 of the first embodiment of the present invention, the first rope 2 and the second rope 5 are bonded together without using any adhesive. In production, therefore, hardly any problem, such as uneven coating of an adhesive, will occur. This makes the bonding strength between the first rope 2 and the second rope 5 high.

In the rope with spiral teeth 1 of the first embodiment of the present invention having the above configuration, the infrared reflectance adjusting material is blended into at least one of the resins such that the temperature rise characteristics of the first resin 4 and the second resin 7 differ from each other. Therefore, the first resin 4 and the second resin 7 have different temperature rise characteristics, and in manufacturing process one resin having the higher temperature rise characteristic can be melted preferentially over the other resin having the lower temperature rise characteristic. As a result, the first rope 2 and the second rope 5 can be bonded together.
In other words, in the bonding process, the first resin 4 and the second resin 7 may be heated to a comparatively low temperature at which one resin having the higher temperature rise characteristic is melted in a large amount while the other resin having the lower temperature rise characteristic is only slightly melted. That is, both the first resin 4 and the second resin 7 do not need to be heated to the temperature at which both of the resins are melted in large amounts.
By providing this bonding process, the resin melted in a large amount fully bonds the first rope 2 and the second rope 5 together.
Therefore, in the manufactured rope with spiral teeth 1, the thermal deformation of the first resin 4 and the second resin 7 in the bonding process is suppressed within an extent necessary for bonding. As illustrated in Figs. 1 and 2, therefore, the outer shapes of the first rope 2 and the second rope 5 can be kept in predetermined shapes.
That is, the protrusion having the predetermined shape is formed by the second rope 5 being spirally wound around the outer circumferential surface of the first rope 2. This protrusion can securely engage with a groove of a gear H. As a result, the driving force of a motor or the like can be reliably transmitted to the rope with spiral teeth 1 via the engaged portion.
Therefore, the rope with spiral teeth 1 of the first embodiment of the present invention has less tooth jumping than the rope in the related art.
The first resin 4 and the second resin 7 in the rope with spiral teeth 1 of the first embodiment of the present invention are thermally less deteriorated than in the rope in the related art. Therefore, the rope with spiral teeth 1 has excellent durability.

The configuration of the first rope 2 will be described below in detail. The first rope 2 is in the shape of a rod with a circular cross section.

The first core material 3 is a wire rope with a multiple-twist structure having 7 x 7 strands. That is, the first core material 3 includes a core strand 9 which is formed by twisting seven lines, and six side strands 8 which are each formed by twisting seven lines. More specifically, the first core material 3 is a wire rope in which the six side strands 8 are wound in a twisted manner around the outer circumferential surface of the single core strand 9.
The number of lines constituting the core strand 9 or each of the side strands 8 is not limited to seven. For example, the number of lines may each be in the range of 2 to 12. The number of the side strands 8 around the single core strand 9 is not limited to six, and may be in the range of 2 to 12, for example.

Examples of the material for the lines constituting the first core material 3 include, but are not limited to, stainless steel, super elastic alloy (e.g., Ni-Ti alloy), and tungsten.
Examples of the stainless steel include, but are not limited to, maitensite-based stainless steel, ferrite-based stainless steel, austenite-based stainless steel, austenitic-ferritic duplex stainless steel, and precipitation-hardened stainless steel.
Among these, the stainless steel is preferable, and austenite-based stainless steel is more preferable.

The first resin 4 covers the outer circumferential surface of the first core material 3 with a substantially uniform thickness. The material forming the first resin 4 is preferably a thermoplastic resin. A more preferable material for the first resin 4 is at least one resin material selected from the group consisting of a polyester resin, a polyamide resin, a polyurethane resin, a fluorine resin such as a TEFLON® (registered trademark) resin, and a polyolefin resin. A further preferable material for the first resin 4 is at least one resin material selected from the group consisting of a polyester elastomer, a polyamide elastomer, and a polyurethane elastomer.

The second rope 5 is in the shape of a rod with a circular cross section. The second rope 5 has substantially the same diameter as the first rope 2. Note that the diameters of the second rope and the first rope may be different from each other.

The second core material 6 is formed of a single line.
Note that, like the first core material, the second core material may be formed by twisting a plurality of single lines.

The line or lines constituting the second core material 6 may be formed of the same material as the first core material 3 described above.

The second resin 7 covers the outer circumferential surface of the second core material 6 with a substantially uniform thickness. The second resin 7 may be formed of the same material as the first resin 4.

The first resin 4 and the second resin 7 are preferably formed of the same kind of resin material.
In the case where the first resin and the second resin are formed of the same kind of resin material, different amounts of the infrared reflectance adjusting material are blended into the respective resins to be prepared. As a result, the first resin and the second resin have different temperature rise characteristics. In the bonding process, therefore, the resin having the higher temperature rise characteristic is melted first. That is, almost only one of the first resin and the second resin is melted at a time. Therefore, this type of melting causes the first rope and the second rope to be bonded together.

The second rope 5 is spirally wound around the outer circumferential surface of the first rope 2 at a predetermined pitch. The pitch in this case is not particularly limited, as long as the second rope 5 engages with the gear H.

The first resin 4 contains an infrared reflectance adjusting material A as the infrared reflectance adjusting material. The second resin 7 contains an infrared reflectance adjusting material B as the infrared reflectance adjusting material. In this case, the infrared reflectance of the infrared reflectance adjusting material A is different from that of the infrared reflectance adjusting material B.
More specifically, the infrared reflectance of the infrared reflectance adjusting material B is higher than that of the infrared reflectance adjusting material A.
Therefore, the temperature rise characteristic of the first resin 4 is higher than that of the second resin 7. In other words, when heat is externally applied uniformly, the first resin 4 is more easily heated and melted than the second resin 7.

Examples of the infrared reflectance adjusting material described above include, but are not limited to, white or chromatic pigments such as a composite oxide pigment, a titanium oxide pigment, a carbon black pigment, an iron oxide-based pigment, a calcination pigment, a metal powder pigment, and an extender pigment; infrared absorbing dyes such as a polymethylene-based dye, an azulenium-based dye, a squarylium-based dye, a thiopyrylium-based dye, an anthraquinone-based dye, a phthalocyanine-based dye, an azo-based dye, and a thioamide-based dye; and infrared reflecting dyes such as a phthalocyanine-based dye, an azo-based dye, an azomethine-based dye, an anthraquinone-based dye, a perinone-perylene-based dye, an indigo-thioindigo-based dye, a dioxazine-based dye, a quinacridone-based dye, and an isoindolinone-based dye.
These infrared reflectance adjusting materials may be used independently or in combination of two or more.
Among these, the infrared reflectance adjusting material more preferably contains at least one pigment selected from the group consisting of the composite oxide pigment, the titanium oxide pigment, and the carbon black pigment.

In the present embodiment, any infrared reflectance adjusting material A and any infrared reflectance adjusting material B may be selected from the infrared reflectance adjusting materials listed above as long as the infrared reflectance of the infrared reflectance adjusting material B is higher than that of the infrared reflectance adjusting material A. For example, the carbon black pigment may be selected as the infrared reflectance adjusting material A and the titanium oxide pigment may be selected as the infrared reflectance adjusting material B.
In addition, the titanium oxide pigment may be selected as the infrared reflectance adjusting material A, and the composite oxide pigment may be selected as the infrared reflectance adjusting material B.

The direction of twisting the side strand 8 in the first rope 2 relative to a central axis 10 of the rope with spiral teeth 1 is preferably opposite to the direction of winding the second rope 5 around the first rope 2.

A method for manufacturing the rope with spiral teeth of the present embodiment will be described below.

### (1) Winding step

A first rope and a second rope are prepared. In this case, the first rope includes a first core material and a first resin covering the first core material. The second rope includes a second core material and a second resin covering the second core material.
The first resin is prepared from a resin material containing an infrared reflectance adjusting material A. The second resin is prepared from a resin material containing an infrared reflectance adjusting material B. In this case, the infrared reflectance of the infrared reflectance adjusting material A is lower than that of the infrared reflectance adjusting material B.
The second rope is spirally wound around the outer circumferential surface of the first rope at a predetermined pitch.

### (2) Bonding step

Next, the first rope and the second rope are bonded together. In this case, the bonding process is performed at a temperature at which the first resin or the second resin having the higher temperature rise characteristic is preferentially melted. More specifically, the bonding process can be performed at a temperature at which the first resin is easily heated and melted in a large amount.
The bonding process is performed, for example, as follows. That is, the first rope and the second rope are passed through an atmosphere of a predetermined temperature (heating furnace). Alternatively, portions of contact between the first rope and the second rope may be irradiated with infrared rays.
Through the above steps (1) and (2), the rope with spiral teeth of the present embodiment can be manufactured.

The rope with spiral teeth of the present embodiment having the above configuration has, for example, at least the following functions and effects.

(1) In the rope with spiral teeth of the present embodiment, the first rope and the second rope are bonded together without using any adhesive. In production, therefore, there would be no problems with, for example, an adhesive being unevenly coated. In addition, the bonding strength between the first rope and the second rope is high.

(2) Since the infrared reflectance adjusting material described above is blended, the temperature rise characteristic of the first resin is different from the temperature rise characteristic of the second resin. In the bonding process, therefore, the resin having the higher temperature rise characteristic is preferentially melted over the resin having the lower temperature rise characteristic. As a result, the resin melted in a large amount (i.e., the resin having the higher temperature rise characteristic) can fully bond the first rope and the second rope together. That is, the bonding process does not need to be performed at such a high temperature that the first resin and the second resin are both melted in large amounts.
Therefore, in the manufactured rope with spiral teeth of the present embodiment, the thermal deformation of the first resin and the second resin in the bonding process is suppressed within an extent necessary for bonding. Therefore, the outer shapes of the first rope and the second rope are kept in predetermined shapes.
With this configuration, the protrusion formed of the second rope spirally wound around the outer circumferential surface of the first rope securely engages with the groove of the gear. As a result, the tooth jumping hardly occurs. Therefore, the driving force of, for example, a motor can be reliably transmitted to the rope with spiral teeth.
Further, the bonding process can be performed at a lower temperature.
Therefore, the first resin and the second resin have excellent durability and are less likely to be subjected to thermal deterioration.

(3) The second resin contains an infrared reflectance adjusting material B having a higher infrared reflectance. In the bonding process, therefore, the second resin is less likely to be heated and melted than the first resin.
Herein, the production of the rope with spiral teeth in the related art containing no infrared reflectance adjusting material will be described. The first rope has a linear shape and a smaller surface area than the second rope. The second rope, on the other hand, is spirally wound and has a larger surface area than the first rope. Therefore, when heat is externally applied using, for example, a heating furnace, the second resin is more easily heated than the first resin. Consequently, the second resin is melted in a larger amount than the first resin. As a result, the first resin and the second resin may be aggregated (integrated), thereby largely deforming the second rope. Due to such deformation of the second rope, a sufficiently large protrusion may not be formed, resulting in the tooth jumping.
In the present embodiment, however, the second resin contains the infrared reflectance adjusting material B having a higher infrared reflectance. Therefore, the second resin is less likely to be heated. Thus, the second resin that is easily heated originally can be prevented from being excessively melted.
This can suppress the deformation of the second rope to a minimum level that is necessary for the bonding. Therefore, the tooth jumping can be more reliably prevented.
The first resin contains the infrared reflectance adjusting material A having a lower infrared reflectance. In the bonding process, therefore, the first resin is more easily heated and melted than the second resin. Although the second resin is less likely to be melted, therefore, the first resin melted in a large amount can fully bond the first rope and the second rope together.

(4) In the case where the infrared reflectance adjusting material is made of at least one pigment selected from the group consisting of a composite oxide pigment, a titanium oxide pigment, and a carbon black pigment, further excellent infrared reflecting properties or infrared absorbing properties are imparted to the infrared reflectance adjusting material. Therefore, the rope with spiral teeth of the present embodiment can advantageously have the above functions and effects (1) to (3).
   These pigments also have, for example, excellent heat resistance, durability, weatherability, and chemical resistance. Therefore, these properties can be imparted to the rope with spiral teeth according to the disclosed embodiments.
   Furthermore, pigments having different degrees of burnish and colors may be used in combination. The combination of such pigments can impart distinguishability to the rope with spiral teeth.

(5) In the case where the first resin and the second resin are made of the same kind of resin material, the bonding strength between the first rope and the second rope is higher than in the case where the first resin and the second resin are made of different types of resin materials.

(6) In the case where the first resin and the second resin are made of thermoplastic resins, these resin materials have excellent elasticity and slidability. Therefore, even when the rope with spiral teeth and the gear repeatedly engage with each other, the damage of the first rope and the second rope can more reliably be prevented.
These resin materials are also excellent in adhesiveness. Therefore, the first rope and the second rope can securely be bonded together. In addition, when the protrusion formed of the second rope and the gear engage with each other, the second rope is less likely to be displaced on the first rope.
In particular, the first resin and the second resin are preferably made of at least one resin material selected from the group consisting of a polyester resin, a polyamide resin, a polyurethane resin, a fluorine resin such as a TEFLON® (registered trademark) resin, and a polyolefin resin. In this case, the rope with spiral teeth of the present embodiment can advantageously have the above effects.
The first resin and the second resin are more preferably made of at least one resin material selected from the group consisting of a polyester elastomer, a polyamide elastomer, and a polyurethane elastomer. In this case, the rope with spiral teeth of the present embodiment can more advantageously have the above effects.

### [Examples]

### (Example 1)

A first rope having a circular cross section was prepared by coating a wire rope core material with a polyester elastomer (Hytrel (registered trademark) 5577 manufactured by DU PONT-TORAY CO., LTD.) as a first resin in a thickness of 0.075 mm. Here, the core material is a stainless steel core material of 0.45 mm in diameter formed of a multiple-twist structure of 7 x 7 strands,
A second rope having a circular cross section was separately prepared by coating a stainless-steel core material of 0.17 mm in diameter with the polyester elastomer as a second resin in a thickness of 0.215 mm.
As an infrared reflectance adjusting material A, 1.5 wt% titanium oxide powders were blended in advance into the first resin (polyester elastomer) of the first rope.
As an infrared reflectance adjusting material B, 1.5 wt% composite oxide pigment (AG235 manufactured by KAWAMURA CHEMICAL CO., LTD.) was blended in advance into the second resin (polyester elastomer) of the second rope.
That is, two different infrared reflectance adjusting materials were used, such that the infrared reflectance properties of the two resins were different.

Next, the second rope was spirally wound around the outer circumferential surface of the first rope at a pitch of 3.048 mm.

Finally, the process of bonding the first rope and the second rope was performed (at 410°C for 24 seconds) in a heating furnace. In this manner, a rope with spiral teeth of Example 1 was manufactured.

### (Comparative Example 1)

A rope with spiral teeth was manufactured in the same manner as in Example 1 except that an infrared reflectance adjusting material was not blended into the polyester elastomers of the first rope and the second rope.

### (Comparative Example 2)

A rope with spiral teeth was manufactured in the same manner as in Example 1 except that 1.5 wt% carbon black powders were blended into the respective polyester elastomers of the first rope and the second rope.
That is, the same infrared reflectance adjusting material was used, such that the infrared reflectance properties of the two resins were the same.

### (Evaluation of deformation)

The rope with spiral teeth of Example 1 having resins with different reflectance properties was cut in the direction perpendicular to the longitudinal direction. The cut surface of the rope was then observed. As a result, it was confirmed that the polyester elastomer of the first rope and the polyester elastomer of the second rope were sufficiently mixed at the bonding portions. In other words, it was confirmed that the first rope and the second rope were securely bonded together.
The second rope was hardly deformed, and the shape of the spiral protrusion formed of the second rope was well maintained.
Therefore, when the rope with spiral teeth of Example 1 is engaged with a gear, it seems that the second rope securely may engage with a groove of the gear, and that the tooth jumping hardly may occur.
Furthermore, the first rope and the second rope were fully bonded together by the short-time bonding process performed at a relatively low bonding temperature. As a result, the thermal deterioration of the polyester elastomer was suppressed to a low level, and it seems that excellent durability may be imparted to the rope with spiral teeth of Example 1.

In the rope with spiral teeth of Comparative Example 1 having no infrared reflectance adjusting material, the polyester elastomer of the first rope and the polyester elastomer of the second rope are not fully mixed at the bonding portions, compared to the rope with spiral teeth of Example 1 manufactured under the same conditions of the bonding process (410°C for 24 seconds). Therefore, the degree of bonding between the first rope and the second rope is low.
To increase the bonding strength in the rope with spiral teeth of Comparative Example 1, an increase in the bonding temperature or time for the bonding process may be required. In that case, however, it is believed that the thermal deterioration of the polyester elastomer is more likely to occur and that the durability of the polyester elastomer is lowered.

In the rope with spiral teeth of Comparative Example 2 having the same infrared reflectance properties, the polyester elastomers of the first rope and the second rope were excessively melted. As a result, the polyester elastomers were aggregated (integrated). In addition, the spiral protrusion formed by the second rope being wound around the first rope was not kept in a predetermined shape.
Therefore, when the protrusion of the second rope in the rope with spiral teeth of Comparative Example 2 is engaged with a gear, it may be difficult for the protrusion of the second rope to engage with a groove of the gear. As a result, the tooth jumping may occur.

### (Other embodiments)

In the case where the infrared reflectance adjusting material is contained in each of the first resin and the second resin in the rope with spiral teeth of the present invention, as described above, the bonding process is performed under the conditions that the second resin is easily heated originally. In this case, the infrared reflectance adjusting material is preferably blended into each of the first resin and the second resin such that the temperature rise characteristic of the first resin is higher than that of the second resin.
Alternatively, however, considering the difference in type of resin between the first resin and the second resin, the difference in condition of the bonding process and the like, the infrared reflectance adjusting material may be blended such that the temperature rise characteristic of the second resin is higher than that of the first resin when the bonding process is performed under the conditions that the first resin positioned inside is easily heated originally.
The infrared reflectance adjusting material may be blended only into the first resin such that the temperature rise characteristic of the first resin and that of the second resin are different from each other. Further alternatively, the infrared reflectance adjusting material may be blended only into the second resin.
In any case, the functions and effects of the present invention can advantageously be obtained.

The rope with spiral teeth of the present invention may be manufactured by the following production method, for example.
That is, a method for manufacturing a rope with spiral teeth of the present invention includes: a winding step of manufacturing a rope precursor by spirally winding a second rope around the outer circumferential surface of a first rope, the first rope being obtained by coating a first core material with a first resin, the second rope being obtained by coating a second core material with a second resin; and a bonding step of performing a bonding process by heating the rope precursor.
When preparing the first rope and the second rope to be used in the winding step, an infrared reflectance adjusting material is blended into at least one of the first resin and the second resin such that the temperature rise characteristic of the first resin differs from that of the second resin.
The temperature at the time of the bonding process in the bonding step is one at which the first resin or the second resin, whichever has the higher temperature rise characteristic, is melted.
By the method for manufacturing a rope with spiral teeth of the present invention, the rope with spiral teeth of the present invention described above can easily be manufactured.
The configurations of the respective members may be the same as those described in the above embodiments.
While the invention has been shown and described in detail, the foregoing description is in all aspects illustrative and not restrictive. It is therefore understood that numerous modifications and variations can be devised without departing from the spirit and scope of the invention.

### Reference Signs List

1 rope with spiral teeth
2 first rope
3 first core material
4 first resin
5 second rope
6 second core material
7 second resin

## Claims

1. A rope (1) with spiral teeth, comprising:
a first rope (2) comprising a first core material (3) and a first resin (4) covering the first core material (3); and
a second rope (5) comprising a second core material (6) and a second resin (7) covering the second core material (6),
wherein the second rope (5) is spirally wound around an outer circumferential surface of the first rope (2), **characterized in that**
at least one of the first resin (4) and the second resin (7) contains an infrared reflectance adjusting material to make a temperature rise characteristic of the first resin (4) and a temperature rise characteristic of the second resin (7) different from each other, and
the first rope (2) and the second rope (5) are bonded together.

2. The rope (1) with spiral teeth according to claim 1,
wherein the first resin (4) contains an infrared reflectance adjusting material A as the infrared reflectance adjusting material,
the second resin (7) contains an infrared reflectance adjusting material B as the infrared reflectance adjusting material, and
an infrared reflectance of the infrared reflectance adjusting material A and an infrared reflectance of the infrared reflectance adjusting material B differ from each other.

3. The rope (1) with spiral teeth according to claim 2,
wherein the infrared reflectance of the infrared reflectance adjusting material B is higher than the infrared reflectance of the infrared reflectance adjusting material A.

4. The rope (1) with spiral teeth according to any one of claims 1 to 3,
wherein the infrared reflectance adjusting material comprises at least one pigment selected from the group consisting of a composite oxide pigment, a titanium oxide pigment, and a carbon black pigment.

5. The rope (1) with spiral teeth according to any one of claims 1 to 4,
wherein the first resin (4) and the second resin (7) comprise the same kind of resin material.

6. The rope (1) with spiral teeth according to any one of claims 1 to 5,
wherein the first resin (4) and the second resin (7) comprise a thermoplastic resin.

7. A method for manufacturing a rope (1) with spiral teeth in accordance with any one of claims 1 to 6, comprising the steps of:
preparing a first rope (2) including a first core material (3) and a first resin (4) covering the first core material (3), and a second rope (5) including a second core material (6) and a second resin (7) covering the second core material (6), wherein a temperature rise characteristic of the first resin (4) is different from a temperature rise characteristic of the second resin (7);
winding the second rope (5) in spiral form around the outer circumferential surface of the first rope (2) at a predetermined pitch in order to obtain a rope precursor;
performing a process of bonding the first rope (2) and the second rope (5) together by heating the rope precursor so that the first rope (2) and the second rope (5) are bonded together at portions of contact between the first resin (4) and second resin (7).

8. The method for manufacturing a rope (1) with spiral teeth according to claim 7,
wherein, when preparing the first rope (2) and the second rope (5), an infrared reflectance adjusting material is blended into at least one of the first resin (4) and the second resin (7) such that the temperature rise characteristic of the first resin (4) differs from that of the second resin (7).

9. The method for manufacturing a rope (1) with spiral teeth according to claim 7 or 8,
wherein the temperature at the time of the bonding process is one at which the first resin (4) or the second resin (7), whichever has the higher temperature rise characteristic, is melted.
